# EUROPEAN PATENT APPLICATION

(11) **EP 2 515 243 A1**
(43) Date of publication of application: **24.10.2012**
(21) Application number: 09852214.7
(22) Date of filing: 17.12.2009
(51) Int. Cl.: G06F 17/30

(54) **METHOD AND SYSTEM FOR MANAGING SOCIAL NOTIFICATIONS FOR MOBILE DEVICES**

(71) Applicant: Telefónica, S.A., 28013 Madrid (ES)
(72) Inventor: OTEIZA LACALLE, Francisco, E-26006 Logroño (ES); ROVIRA SIMÓN, Jordi, E-08282 Sant Martí Sesgueioles (Barcelona) (ES)
(74) Representative: Carpintero Lopez, Francisco
(86) International application number: PCT/ES2009/070597
(87) International publication number: WO 2011/073462

(57) **Abstract**

The invention comprises a system made up of at least 2 modules, shown in Figure 3. The first module is located in the operating system layer of the mobile device (SMNS service module), and the other module is rolled out in a server belonging to the architecture of the mobile network operator (SMNS platform module). The main purpose of the invention is to generate a standard service shared by all the mobile devices. Integrating the SMNS service module reduces the standardization problems that manufacturers of this technology have encountered thus far. The fact that the same module with the same API is implemented in any operating system will make it much easier for social clients to migrate from one terminal to another. This standardization also affects the communication of social clients using the SMNS service since social clients (SC) can now exchange information even if they have been developed by different mobile software companies.

## Description

### Introduction

The following invention seeks to contribute to current social aggregators. The central purpose is for social services to be used massively and for them to be perfectly integrated in social networks already existing on the Internet. Therefore, the main purpose of the invention is to offer social capabilities integrated in mobile devices.

### State of the Art

In recent years there has been a significant increase in the use of social networks by people everywhere. These internet services have become the most visited and successful sites for millions of users. This process has taken place on a global level. Facebook has become the favorite social network in all countries as a result of its popularity and design. This portal has become a universal reference point in the world of social networks and has become cutting edge in this new social technology.

There are only 2 or 3 social networks dominating the market in each country. Right now, the effort it takes to be in a privileged market position is not, in many cases, worth the trouble because of market saturation. There is currently a limited space in relation to new proposals because users do not normally handle more than two social networks at a time. Users are loyal to the social networks to which they are connected because their friends and family are in them. This is why the market is aiming towards social aggregation services. These services have the information that unifies all the social networks to which the user is connected.

Many advances have been made in the mobile domain, but some type of evolution is still necessary if the experience in mobiles is to be as satisfactory as it is in PCs. This success will depend on where services are standardized. OMA is responsible for standardizing mobile technology, and the working groups related to social networks are:
Messaging Working Group (OMA).
Presence and Viability Working Group (OMA).
Location Working Group (LWG).

Conventional social network aggregators allow the user to manage all of his/her social activity from the internet using a single mobile client. Such services are connected with more popular social networks to extract social events from them. This process is carried out using the API's given by each social network. There is no unified standard.

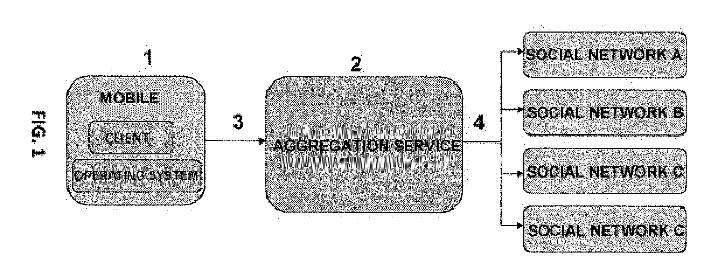

These services are made up of 2 parts, the client of the mobile and the platform of the server. The mobile client, Figure 1(1), consists of resident software or a web service responsible for handling the user interaction. It presents the information and gathers the events occurring in the telephone. To communicate social events, it uses the basic communication support offered by the operating system of the telephone but it must take care of managing social notifications itself. This includes formatting the information, maintaining the social session, temporarily storing the information, controlling redundant information and instant notifications

The services use a server platform, Figure 1(2), which is responsible for the communications with social networks and with the mobile clients. The communications do not follow a standard; in the case of social networks, the latter use an interface defined by each social network, Figure 1(4). In the case of data exchange between client and platform, such exchange is done with a single format associated with each aggregation service, Figure 1 (3). The platform is at the same time responsible for handling all the accounts associated with each user, storing the information in a temporary file and almost immediately notifying the changes or news of each social network to which the user belongs. This condition means that the communication between aggregators is impossible. The technology used for notifying these events is usually http. Clients start a time-to-time or on-demand communication to know whether there are updates. This means that notifications are sometimes not made immediately but when the user requests them.

The main functions that the aggregators offer users are:
- Combining the different user accounts of each social network the user is registered in.
- Viewing the events of the most popular social networks.
- Changing the status.
- Viewing all friends.
- Contacting friends.
- Searching for photo albums and tagging them.
- Instantly uploading geolocated photos.

Samples of this architecture can be found in the social aggregator for mobiles KETEKE (social network of Telefónica), with a detailed description in NEMOS: Working towards the social mobile, ICME 2009. A similar architecture is also used by Xumii.com and Jibe.com.

The current generation of social aggregators for mobiles is encountering problems related to handling social activity through the mobile. This is mainly a result of the lack of communication standards. The connections with each social network are done differently, Figure 1 (4). They are done using social network interfaces which are offered to third parties who are normally companies needing this data. This is a problem when new services are added for each social network. Another standardization problem occurs when trying to communicate the different aggregators with one another. The current situation in which there is no common standard means that the product is incomplete.

Since there is no unified architecture defining a global operating mode, mobile applications have trouble in receiving social notifications in real time. They are forced to implement their particular methods to know what is happening in the social life of the user distributed between: social networks and the architecture of the operator's network. They cannot register for a module that notifies them of what is happening and therefore not have to perform this task since it does not exist in the implementations of the operating system of the telephone.

The fundamental problem is that the focus that has been placed on social mobile clients has only been at the level of the application layer of the mobile telephone. This again entails communication problems, in this case between all those applications related to what is social that are rolled out in a mobile telephone. This is due to the inexistence of a specifically designed module responsible for managing social notifications in the operating system layer and allowing other applications to access the data. It is significant that there is not an OMA group exclusively for developing a specification on social activity for mobile telephones. The application layer could thus be supported in the operating system layer for all that relating to anything social occurring in a mobile telephone.

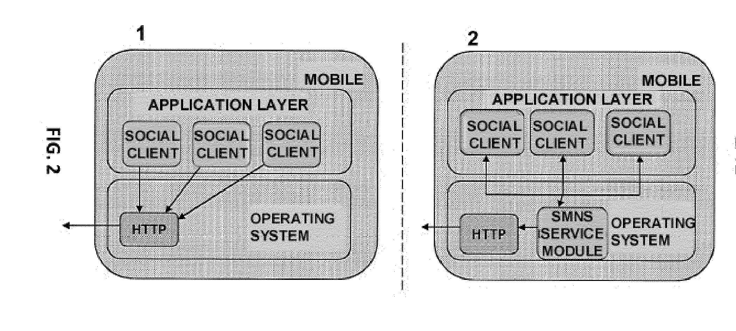

Figure 2(1) shows the current architecture available in mobiles. Social clients (SC) use the communication module of the operating system (OS) to connect with the server platform. They cannot exchange social data using a generic module. It is possible that they could do it directly without involving the operating system layer, but only if both implement a complicated mutual recognition system.

The inexistence of a specific module in the operating system or in the architecture of the network operator capable of providing social services makes it necessary to implement this server platform. Otherwise, each company wanting to distribute its social applications is forced to invest considerable time in developing its own platform which will only be useful for its own clients. Furthermore, the amount of transactions would also increase, which could result in delays in communications.

Security is also compromised. There is not a single point where information is centralized or managed by a trust entity such as a network operator.

Existing solutions are not capable of integrating these social activities in the daily life of users. Users perform several activities daily which could be easily registered through their mobiles. It could thus be possible to maintain a continuous experience using the different technological channels (mobile, computer, tv). All aspects of social life could ultimately be included.

The invention consists of an enabler which allows the user of mobile applications to use all the data generated by the social events of the user. This enabler will be used either by the manufacturer applications or by applications developed by third parties. This invention allows integrating an exclusively social service in the operating system of mobile telephones (for example, contact phonebook, instant email service). This enabler will allow all the social activity of the user to be accessible as a source of information for client applications using the application environment in mobile telephones. This enabler is supported in the mobile device and in the architecture of the network operator. Double intervention is therefore necessary.

### Description of the invention

The first object of the present invention is a method for managing social notifications for mobile devices (SMNS, Social Mobile Notification Service), comprising the following phases:
- implementing at least one service module integrated in the operating system of a mobile device, provided with means for treating, updating and storing notifications of social events,
- implementing at least one platform module integrated in a server of the architecture of a mobile network operator provided with means for storing, treating and distributing notifications of social events,
- setting up a communication between the platform and service modules through a protocol designed by means of http technology (XML, API REST, Web services) and transparent to the application layers above the operating system layer,
- exchanging information with social networks by means of an API,
- making push and pull requests, push requests being generated by entities external to the user and pull requests being generated by the current user provided that the service module rolled out in the mobile device does not contain information that is required,
- managing notifications received from external entities,
- managing notifications of response to the pull and push requests made.

Furthermore, during the phases for managing notifications received and generated as a response to push and pull requests and depending on the origin of the flow of communication, several methods can be differentiated in the different modules making up the system object of the invention:
1. When a notification is generated in the service module, it comprises the following phases in the platform module:
   - receiving the notification in a REST module (Representational State Transfer) through a pull request,
   - breaking down the notification in the REST module,
   - routing the notification towards an internal service module managing the internal services of the platform module, each of them including at least one functionality grouped by subject matter,
   - analyzing and treating the notification in the internal service module,
   - requesting data relating to the notification from an element selected from
      - a database which is accessed through a data access module,
      - a connection module connecting with external social networks and the operator services,
   - returning a response to the operation performed to the REST module through the internal service module,
   - adapting the response in the REST module to a format required by the service module included in the mobile device,
   - sending said response to the notification service module, which comprises receiving notifications from the daemon processing module and transmitting them to the service module using a short message service center (SMSC) of the service module by using a push request.
2. When the notification is generated in the external social networks and operator services, it comprises the following phases in the platform module,
   - a connection module receiving the notification,
   - storing said notification in queues of an asynchronous queue module,
   - reviewing and treating the content of the queues in a daemon processing module,
   - storing and updating the notification in a module selected from
      - a database,
      - the service module through a notification module which sends it by means of push requests.
3. When the notification is generated in WEB clients or native applications, it comprises the following phases in the service module,
   - receiving, breaking down and readdressing the notification in an API (Application Programming Interface) management module towards an internal service module, which comprises handling the logic of social requests and negotiating data between the clients rolled out in the mobile device, and it additionally comprises means for checking information and updating social events,
   - the internal service module treating the notification by means of an option selected from:
      - using the temporary database,
      - sending a request to the platform module through a platform connector module.
4. When notifications are generated in the platform module, it comprises the following phases in the service module,
   - the notification service module receiving the notification by means of push requests,
   - the notification service module managing the notification,
   - notifying previously registered clients through the API management module,
   - treating the notification by means of the temporary database through a data access module provided that the required information is located in the database or the information exchange operation takes place between social clients rolled out in the same mobile terminal and involves only them.

Furthermore, once all the aforementioned phases for establishing communication have taken place, an additional phase can occur in which social clients sharing a module belonging to the operating system can share the information more directly without using the platform module. This involves a shorter response over time and a more optimized use of network resources. Therefore by using only the service module, the information exchange between social clients can be carried out.

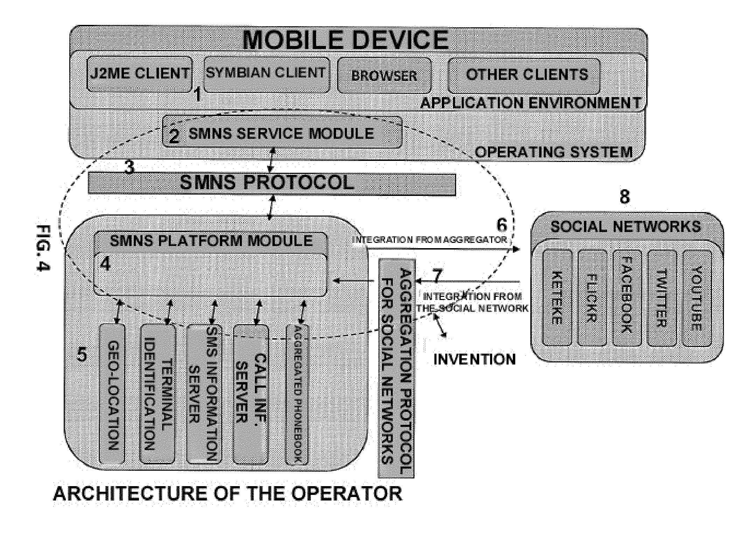

The integration of the platform module by means of a connection module with social networks is done in two ways:
- This connection module is an implementation of the platform which is connected using the API's provided by social networks. In this case, the platform module alone is responsible for making requests and complies with the standards of social networks to extract social information, Figure 4(6). Communication with social networks is normally by means of http technology, but it depends on each case. The detailed information of each API would have to be consulted.
- On the other hand, the platform module offers a public API so that other networks which are not connected using the method described above can include their information in said module. The social aggregator will define a public API for exchanging data with social networks, Figure 4(7). To handle this communication, it rolls out a series of web services accessible via http. These web services include the basic primitives of consulting and updating social events and the aggregated contact list.

Furthermore, when the platform module sets up the communication by means of the public API, it can do so by means of web services accessible via http which include basic functions of asking about and updating social events and the contact list aggregator.

The platform module can also provide network operator services other than the social notification service. Said operator services can be selected from location services, aggregated phonebook services, calls and messages, but there can also be more, such as the presence service, for example.

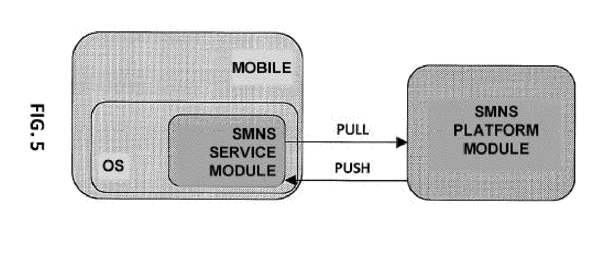

The communication between the invented modules (service and platform) is set up through a simple standard protocol using http connections, Figure 4(3). The protocol includes push and pull requests, Figure 5-.

Pull requests are information requests that are made from the mobile device to the server. They are requests generated at the application level of the mobile as a response to the activity of the user in social networks. Pull requests include information about social global events, search for events, updates of events and management of the aggregated contact list. These requests are only made in those cases in which the SMNS service does not contain the information that is being requested.

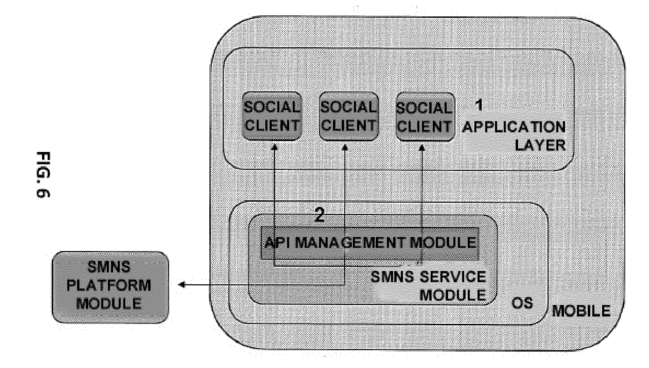

Push requests are information requests relating to notifications of events occurring either in social networks or in operator services related to the user. They are generated by external entities and the communication starts in the server, ending in the client. It can involve the user in two ways: directly, the event is related to the user; or indirectly, when the party involved is a friend from the user's phonebook. These push requests inform about what is happening in the user's social networks by means of real time notifications preferably using the SMS system connecting with the Short Message Service Center (SMSC) sending an SMS with the notification to the SMNS service module, Figure 6(1). However, other systems can be used for sending push requests. For example, a notification system developed expressly by the operator to perform this task or a two-way communication system between the mobile device and the platform module by means of TCP-IP technology can be used.

According to additional particular embodiments, the method of the present invention comprises performing one or several of the following functions:
- registering a client application to receive notifications,
- inserting a social event previously recorded by the social client,
- updating the status of the user as well as profile details,
- activating client applications,
- sending social notifications from the SMNS service to the social client,
by means of an API management module which includes a public interface making applications of higher layers use all the functionalities.

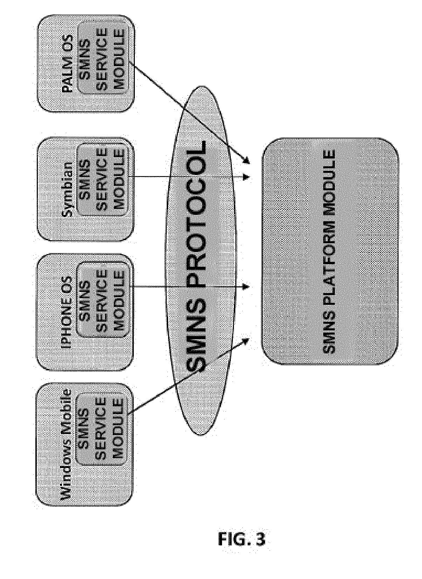

An additional object of the present invention is a system for managing social notifications for mobile devices made up of at least the following modules, shown in Figure 3:
Platform module SMNS, Figure 4(4), integrated in a server belonging to the architecture of a mobile network operator and provided with means for storing, treating and distributing notifications of social events. All this social activity is a result of the activity generated in social networks. It can be extracted and inserted in the operator's network (location, phonebook contacts, device features...), Figure 4(5). It also includes contact aggregation functions where the profiles of people that the user knows are stored in all social networks. This information is extracted from the mobile's contact phonebook. All this information is available for SMNS services, Figure 4(2), so it can also be accessible for a public Rest API.

The bases of the invention of the SMNS platform module correspond to the concept of a social aggregator which pools and integrates all the social information of the user made from any source. This aggregation platform is responsible for channeling social information from the internet to the mobile network, integrating it with the user information extracted from the mobile operator's network.

The platform module also integrates connectors with other operator services, Figure 4(5). There are platforms in the operator's network which store social information, i.e., location, aggregated phonebook, calls and messages. The aggregator therefore has more information about the user.

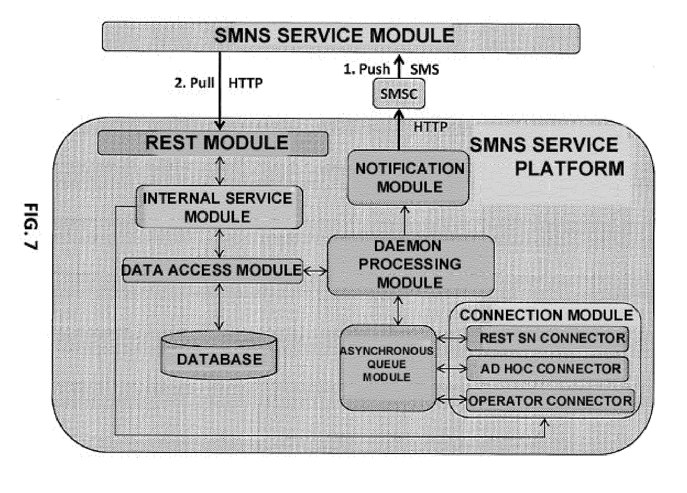

The modules which in turn integrate the SMNS platform module and described in Figure 7 are:
- REST module: http interface integrated in a web server which allows access to the functionalities of the aggregator and is used by the SMNS service module. By using a REST syntax, it facilitates identifying the source to be used.
- Internal service module: The REST layer is only used as an envelope, this module manages the internal services. A service includes one or more functionalities grouped by subject matter.

- Asynchronous queue module: made up of asynchronous queues used for communicating with the connector modules that send and receive information of external networks.
- Daemon processing module: daemons which are periodically executed and are responsible for importing user data that has been created or updated in external networks. It is also responsible for alerting the notification server about status changes for sending them in real time to the SMNS service module.
- Notification module: It sends notifications by connecting with the Short Message Service Center (SMSC) rolled out in the operator's network so that it sends the notifications received by the daemons using the SMNS service.
- Connection module: Connections with external social networks and the operator services which is in turn integrated by :
   ○ A REST SN connector module: REST interface used so that social networks send their information to the SMNS aggregation platform.
   ○ An AD HOC connector module: processes connecting external networks. When they receive a signal in the form of an asynchronous message, it is sent to the platform through the queue module.
   ○ An operator connector module: module connecting with operator services to extract social information of them.
- Data access module: common interface between the operator connector module and a database of the access layer.
- Database: stores the user data, his/her identifier, password for the accounts in social networks and the social events gathered from social networks.

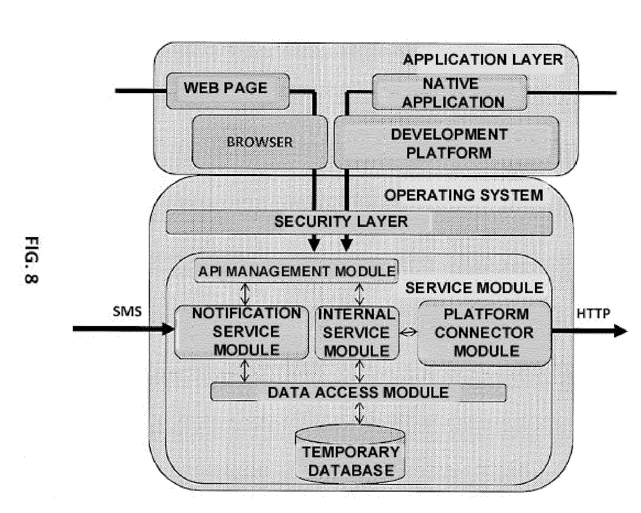

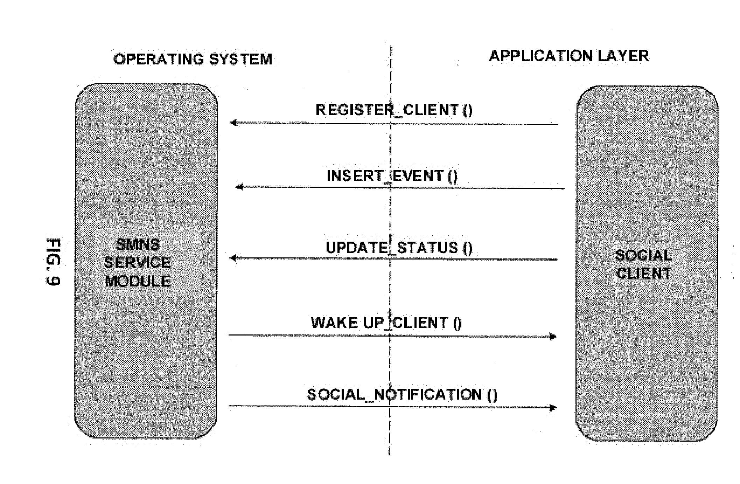

The SMNS service module, Figure 4(1), is integrated in the operating system layer of the mobile device. The central purposes of those services are: to allow the application layer, which is above the OS layer, Figure 4(1), to consult information, update and register social events together with access to the aggregated contact list. The connection of the SMNS service with its platform is completely transparent for the application layers which are above it. For this reason, its existence will not be noticed and specific modules for handling it will not be implemented. The service will act like another resource of the operating system (such as access to the phonebook or access to the SMS container). The module is in turn made up of the following modules, Figure 8-:
- API management module: includes a definition of a public interface such that social clients rolled out in the application layer (application environment, AE) can use all the functionalities. The basic orders will mainly consist of updating and deleting user social events. They will also include orders for handling the user's contact phonebook. The technical features of this module will depend on the development platforms which are integrated in the mobile telephone. The set of functionalities offered is described in Figure 9.
- Notification module: The module will receive social notifications in real time. This will prevent the need for social clients to update the information in the platform module every so often. The process is performed using an internal application register service rolled out in the SMNS service module, such that the application will be enabled when the notification occurs. Previously, to perform this functionality, it must be mapped out in the operating system of the mobile that all the SMS from the platform are routed towards the SMNS service module so that it can be responsible for managing them. The notification module is responsible for informing all the registered applications through the API management module.
- Internal service module: module handling the logic of social requests through the API management module. It handles requests and analyzes what data source (temporary database or SMNS platform) carries out the order. It is also responsible for negotiating social data between the social clients rolled out in the mobile.
- SMNS platform connector module: module used to connect with the SMNS platform using an http client.
- Data access module: common interface between the operator connector module and a database of the access layer.
- Temporary database: It stores the most current social information to limit the amount of requests made to the platform. This database could be implemented in the memory of the operating system and therefore outside the service module if the implementation of the manufacturer required it.

The invention has the following advantages with respect to the state of the art:
a. A new standardized component will be available in mobiles which will obtain social information about the user of the mobile device.
b. When the applications with the social service are integrated in the mobile terminal, security increases since only those applications that the user has installed and which have been given expression to access the SMNS service could access the data.
c. This is a standard solution which tries to overcome the disaggregation responsible for the scarce development of the mobile social network market. There is a single point of access to the information for mobile social applications.
d. The time used in developing mobile social applications is reduced since they do not have to implement a complex client-server system to obtain data. For that purpose they have the primitives provided by the SMNS server.
e. Mobile social applications mobiles have a faster response since recent events are stored in the mobile terminal, without needing to use external servers.
f. Real time notification services such as SMS or call services.
g. It includes a social aggregation system based on an open protocol allowing any social network on the Internet to be integrated with the platform. The aggregator can thus immediately be included without having to change its architecture.
h. The user can access all his/her social information in a simple manner. The user will have a global view of all his/her social activity and a more immediate relationship with the virtual identities of his/her acquaintances.

The invention can contribute to current OMA standards.

The main purpose of the invention therefore is to generate a standard service shared by all mobile devices. Each manufacturer must implement in the operating systems of their devices a module which complies with the requirements of the communication standards (SMNS protocol), with the aggregation platform (SMNS platform module) and with the set of rules previously defined for the mobile clients. Mobile social client developers will therefore be given a generic API where social activities can be found and modified. Integrating the SMNS service module reduces the standardization problems that developers of these services have encountered thus far. The fact that the same module with the same API is implemented in any operating system will make it much easier for clients to migrate from one terminal to another. This standardization also affects the communication of social clients using the SMNS service since social clients can now exchange information even if they have been developed by different companies.

An analogy can be established between the invention and the instant messaging service for mobiles. SMS are real time notifications made from personal events and is a service integrated in the operating system. As a result, third parties can develop applications using this messaging system. In relation to this invention, the purpose is to integrate immediate notifications of events between the digital social network and the user. The digital social network can thus be conceived as a collection of all the people with whom the user is related and of all the people having a virtual identity.

It must be observed that the terms service module and SMNS service module, platform module and SMNS platform module and protocol and SMNS protocol have been used indistinctly in the present specification.

### Brief description of the Drawings

Figure 1 shows a common architecture of social aggregators.
Figure 2 depicts the architecture of a conventional mobile.
Figure 3 depicts a global version of this invention. The top part shows the operating system which must implement the standard SMNS service. The bottom part shows the social platform which is rolled out in the architecture of the network operator.
Figure 4 shows a detailed view of the architecture of the SMNS system.
Figure 5 shows the detailed description of the architecture of the SMNS platform.
Figure 6 shows the detailed description of the architecture of the SMNS service module.
Figure 7 shows in detail the modules making up the SMNS platform module.
Figure 8 shows in detail the modules making up the SMNS service module.
Figure 9 shows the set of functionalities offered by the API management module.
Figure 10 shows an example of the notification of an event of registering a client.
Figure 11 shows an example of recent event information request.
Figure 12 shows an example of an insertion of an event in the system.

### Examples of the main functionalities of the method and systems for social notifications for mobile devices

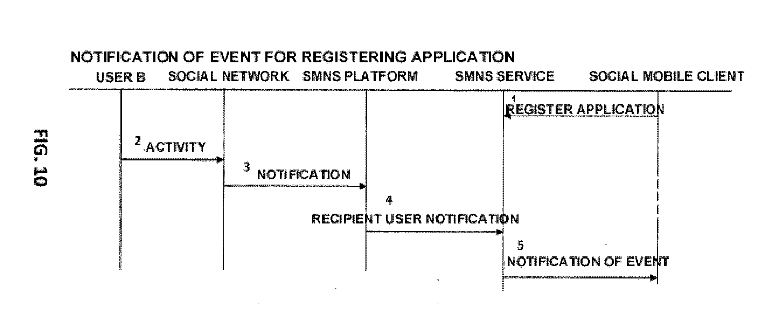

The first example, Figure 10, shows a notification of an event for any social client installed in a mobile telephone. Once it has been installed, the client will be registered in the SMNS service which is available in the operating system of the mobile at the time (1). From that point on, all social events received by the service will be sent to the client. A user called Bob, who is included in the aggregated friend list, is performing an activity (2) which is being recorded in the social network. The aggregation platform available in the architecture of the operator (3) is quickly notified of the activity. The SMNS platform searches in the friend list for those who can see the event to send the notifications to each of them to their mobile telephones (4). Once the client is installed, then he/she will register said service. The SMNS service rolled out in the operating service of the mobile will notify social clients about the events that have arrived (5). Clients will act according to the events received and the specifications implemented. This method of acting corresponds to push requests because the server is responsible for notifying mobiles and clients of new events.

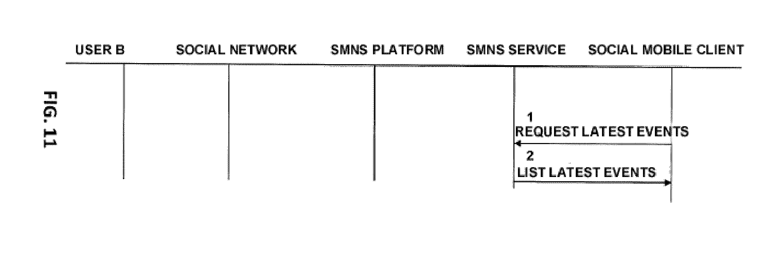

Figure 11 describes the process when it is the client who makes an information request. This information resides in the SMNS service of the mobile. This prevents additional requests being made to the server and at the same time does not generate traffic in the network. Clients seek to obtain the latest events of the user of the mobile. This operation is called pull.

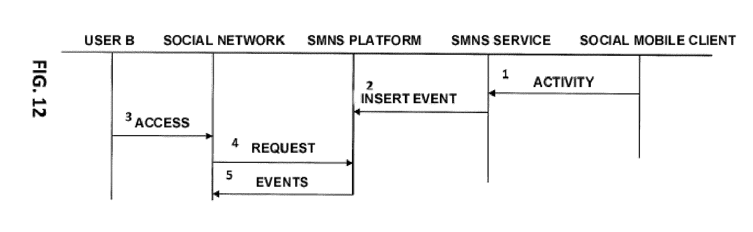

Figure 12 shows the case where the user carries out an activity that has been registered by a social mobile client. The latter notifies the SMNS service of the OS by means of a public API call (1). This activity is then inserted in the SMNS platform (2). After this time, any social network subscribing to the SMNS platform can access the information of this user (3)(4)(5).

## Claims

1. Method for managing social notifications for mobile devices, **characterized in that** it comprises the following phases:
- implementing at least one service module integrated in the operating system of a mobile device, provided with means for treating, updating and storing notifications of social events,
- implementing at least one platform module integrated in a server of the architecture of a mobile network operator provided with means for storing, treating and distributing notifications of social events,
- setting up a communication between the platform and service modules through a protocol designed by means of http technology and transparent to the application layers above the operating system layer,
- exchanging information with social networks by means of an API,
- making push and pull requests, push requests being generated by entities external to the user and pull requests being generated by the current user provided that the service module rolled out in the mobile device does not contain information that is required,
- managing notifications received from external entities,
- managing notifications of response to the pull and push requests made.

2. Method for managing social notifications for mobile devices according to claim 1, **characterized in that** in the phases for managing notifications received and notifications of response when a notification is generated in the service module, it comprises the following phases in the platform module:
- receiving the notification in a REST module through a pull request,
- breaking down the notification in the REST module,
- routing the notification towards an internal service module managing the internal services of the platform module, each of them including at least one functionality grouped by subject matter,
- analyzing and treating the notification in the internal service module,
- requesting data relating to the notification from an element selected from
• a database which is accessed through a data access module,
• a connection module connecting with external social networks and the operator services,
- returning a response to the operation performed to the REST module through the internal service module,
- adapting the response in the REST module to a format required by the service module included in the mobile device,
- sending said response to the notification service module, which comprises receiving notifications from the daemon processing module and transmitting them to the service module using a short message service center (SMSC) of the service module by using a push request.

3. Method for managing social notifications for mobile devices according to claim 1, **characterized in that** in the phases for managing notifications received and notifications of response when the notification is generated in the external social networks and operator services, comprises the following phases in the platform module,
- a connection module receiving the notification,
- storing said notification in queues of an asynchronous queue module,
- reviewing and treating the content of the queues in a daemon processing module,
- storing and updating the notification in a module selected from
• a database,
• the service module through a notification module which sends it by means of push requests.

4. Method for managing social notifications for mobile devices according to claim 1, **characterized in that** in the phases for managing notifications received and notifications of response when the notification is generated in WEB clients or native applications, it comprises the following phases in the service module,
- receiving, breaking down and readdressing the notification in an API management module towards an internal service module, which comprises handling the logic of social requests and negotiating data between the clients rolled out in the mobile device, and it additionally comprises means for checking information and updating social events,
- the internal service module treating the notification by means of an option selected from:
• using the temporary database,
• sending a request to the platform module through a platform connector module.

5. Method for managing social notifications for mobile devices according to claim 1, **characterized in that** in the phases for managing notifications received and notifications of response when notifications are generated in the platform module, it comprises the following phases in the service module,
- the notification service module receiving the notification by means of push requests,
- the notification service module managing the notification,
- notifying previously registered clients through the API management module,
- treating the notification by means of the temporary database through a data access module provided that the required information is located in the database or the information exchange operation takes place between social clients rolled out in the same mobile terminal and involves only them.

6. Method for managing social notifications for mobile devices according to claim 1, **characterized in that** it performs an information exchange between the platform module and the social networks by means of a connection module which is connected with the networks through API's selected from:
i. API's provided by each of the social networks, the platform module being the module making the social information requests, and
ii. a public API generated by said platform module so that each social network which is not connected through the method described in i. can perform the information exchange with the mobile device through the mentioned public API.

7. Method for managing social notifications for mobile devices according to claim 1, **characterized in that** the pull requests comprise information about social global events, search for events, updates of events, information about the source that generated them and treating the aggregated contact list.

8. Method for managing social notifications for mobile devices according to claim 1, **characterized in that** the push requests comprise information about what is happening in the user's social networks by means of real time notifications using a system selected from:
- SMS system connecting with the Short Message Service Center, SMSC, by sending an SMS with the notification to the service module,
- notification system developed expressly by the operator to perform this task,
- two-way communication system between the mobile device and the platform module by means of TCP-IP technology.

9. Method for managing social notifications for mobile devices according to claim 1, **characterized in that** the notification service module, as a phase prior to receiving notifications, maps out the operating system of the mobile device making all the SMS from the platform module be routed towards the service module so that the latter is responsible for managing them and is additionally responsible for informing about all the registered applications through an API management module.

10. Method for managing social notifications for mobile devices according to claim 1, **characterized in that** the platform module provides network operator services other than the social notification service.

11. Method for managing social notifications for mobile devices according to claim 10, **characterized in that** said operator services are selected from location services, aggregated phonebook services, calls and messages.

12. Method for managing social notifications for mobile devices according to claim 1, **characterized in that** the API management module comprises performing one or several of the following functions:
- registering a client application to receive notifications,
- inserting a social event previously recorded by a social client,
- updating the status of a user as well as his/her profile details,
- activating client applications,
- sending social notifications from the service module to the social client,

13. Method for managing social notifications for mobile devices, wherein once the phases described in claim 1 have been carried out, it comprises an additional phase in which an information exchange between social clients sharing the service module belonging to the operating system is established without using the platform module.

14. System for managing social notifications for mobile devices, **characterized in that** it comprises at least the following modules:
- a service module integrated in the operating system of a mobile device, provided with means for treating, updating and storing notifications of social events, and through which the social clients rolled out in the application layer above the SO layer have access to said information,
- a platform module integrated in a server of the architecture of a mobile network operator, provided with means for storing, treating and distributing notifications of social events.

15. System for managing social notifications for mobile devices according to claim 14, **characterized in that** the platform module comprises at least the following modules:
- a REST module which comprises making functionalities of the platform module accessible,
- an internal service module which comprises managing the internal services,
- an asynchronous queue module which comprises communicating with a connection module that sends and receives information of the different external social networks and comprises means for distributing the user social activity,
- a daemon processing module which comprises importing user information that has been created in the external social networks as well as alerting the notification server about status changes in the service module for sending them in real time,
- a notification module which comprises receiving notifications from the daemon processing module and transmitting them to the service module by means of a short message service center (SMSC).
- a connection module for connecting with external social networks and operator services,
- a data access module which is the database of the access layer,
- a database storing the user data, his/her identifier, password for the accounts in social networks and the social events gathered from social networks.

16. System for managing social notifications for mobile devices according to claim 14, **characterized in that** the service module comprises at least the following modules:
- an API management module comprising a public interface which social clients access to use all the functionalities of the system.
- a notification service module which comprises receiving real time notifications using an internal service which includes an application register.
- an internal service module which comprises managing the logic of social requests through the API management module and negotiating data between the clients rolled out in the mobile device,
- a platform connector module contacting with the platform module by means of an http (client) computer application.
- a data access module which is the database of the access layer.
- a temporary database storing the most current social information limiting the amount of requests to the platform and comprising means for registering social events.

17. System for managing social notifications for mobile devices according to claim 15, **characterized in that** the connection module in turn consists of the following modules:
- a REST SN connector module which comprises sending information from social networks to the platform module.
- an AD HOC connector module which comprises sending asynchronous messages from the asynchronous queue module to the platform module.
- an operator connector module which comprises making a connection with a service operator to extract social information from it.
